# EUROPÄISCHE PATENTSCHRIFT

(11) **EP 3 634 657 B1**
(45) Veröffentlichungstag und Bekanntmachung des Hinweises auf die Patenterteilung: **21.06.2023**
(21) Anmeldenummer: 18732683.0
(22) Anmeldetag: 05.06.2018
(51) Int. Cl.: B08B 9/20, B08B 3/14

(54) **VERFAHREN ZUR BEHANDLUNG VON FLASCHEN IN EINER FLASCHENWASCHANLAGE UND FLASCHENWASCHANLAGE**
METHOD FOR HANDLING BOTTLES IN A BOTTLE WASHING SYSTEM AND BOTTLE WASHING SYSTEM
PROCÉDÉ POUR LE TRAITEMENT DE BOUTEILLES DANS UNE INSTALLATION DE LAVAGE DE BOUTEILLES ET INSTALLATION DE LAVAGE DE BOUTEILLES

(30) Priorität: 07.06.2017 DE 102017112532
(43) Veröffentlichungstag der Anmeldung: 15.04.2020
(73) Patentinhaber: Wolfgang Jaske und Dr. Peter Wolf GbR, 49811 Lingen (DE)
(72) Erfinder: WOLF, Peter, 26209 Hatten (DE); JASKE, Wolfgang, 49811 Lingen (DE)
(74) Vertreter: Jabbusch, Matthias
(86) Internationale Anmeldenummer: PCT/EP2018/064696
(87) Internationale Veröffentlichungsnummer: WO 2018/224467

(56) Entgegenhaltungen:
- DE-A1- 2 510 927
- DE-C- 877 256

## Beschreibung

Die Erfindung betrifft ein Verfahren zur Behandlung von Flaschen in einer Flaschenwaschanlage auf dem Weg zur Abfüllung, wobei die Flaschen nach der eigentlichen Reinigung mit Frischwasser gespült werden, wobei die Flaschen die Flaschenwaschanlage von einer Vorwäsche in Richtung einer Hauptwäsche und einer Spülung durchlaufen, wobei bei Kühlung und Spülung warmer, gereinigter Flaschen die Temperatur der Flaschen und die Temperatur der Luft in den Flaschen nach dem Spülvorgang derart herabgesetzt ist, dass mindestens eine weitere Abkühlung und eine Kondensation von Wasserdampf in den Flaschen und eine Volumenverringerung der Luft durch Abkühlung und dadurch eine Wiederverkeimung durch mit der Luft einströmende Keime in die Flaschen weitgehend verhindert wird, wobei die Abkühlung des Frischwassers durch Wärmeentzug mit einer Kühleinheit erreicht wird und die dem Frischwasserstrom entnommene Energie nach dem Spülvorgang in der Flaschenwaschanlage auf der Energieabgabeseite der Kühleinheit auf einem höheren Temperatur Niveau durch erwärmen des Spülwassers wieder zugeführt wird.

Weiterhin betrifft die Erfindung eine Flaschenwaschanlage mit mindestens einer Einrichtung zur Durchführung einer Hauptwäsche und einer Einrichtung zur Durchführung einer nachfolgenden Spülung mit Frischwasser.

Ein gattungsgemäßes Verfahren und eine entsprechende Vorrichtung sind aus der DE 2510927A1 bekannt. Die hier beschriebene Flaschenwaschanlage basiert auf einem Kreislauf. Frischwasser kann von außen über eine Leitung nachgeführt werden, wenn in dem Kreislauf Wasser fehlt. Das umlaufende Wasser wird in einem Wärmetauscher auf 12 bis 15 °C abgekühlt. Mit einem Wärmetransportmedium in einem Kompressor wird die in den Wärmeaustauschern aufgenommene Wärme wieder abgegeben. Mit diesen wird die Temperatur der Reinigungsflüssigkeit von etwa 65 °C auf 80 °C erhöht.

Aus der DE 877256 ist ein Verfahren zum Kühlen von Gefäßen und eine unter Frischwassertemperatur und eine Reinigungsmaschine mit einer Abteilung zur Durchführung des Verfahrens beschrieben. Das Frischwasser wird gegen Strom durch eine Flaschenwaschanlage geführt.

Pfandflaschen werden nach einer Vorsortierung gereinigt und aus hygienischen Gründen anschließend so schnell wie möglich wieder befüllt. Der Reinigungsvorgang ist in mehrere Stufen mit mindestens einer Vorreinigung, einer Hauptreinigung mit Reinigungsmitteln, Säuren und Laugen und im letzten Prozessschritt einer Spülung mit zulaufendem kalten Frischwasser aufgeteilt. Die Vorreinigung dient der Entfernung grober Verschmutzung und wird mit einer moderat heißen Waschlauge im Bereich von 40 bis 65 °C durchgeführt. Die Hauptreinigungsstufe arbeitet bei 60 bis 90 °C. Das Reinigungswasser der Hauptreinigungsstufe besteht aus einer Waschlauge mit hohem pH-Wert oder auch sehr niedrigem pH-Wert. In modernen Flaschenwaschanlagen wird zulaufendes Frischwasser zur Spülung und Abkühlung der gereinigten Flaschen verwendet und durchläuft den Waschprozess entgegen der Laufrichtung der zu reinigenden Flaschen. Es können auch noch ionisierende Verbindungen zur Entkeimung zugefügt bzw. auch in situ hergestellt werden. Damit der Verbrauch von Wasser und auch der Verbrauch an Lauge möglichst gering gehalten werden kann, wird das verunreinigte Waschwasser ständig über Reinigungsanlagen für den Waschprozess aufbereitet. Die Flaschen sollen am Ende des Waschprozesses eine Temperatur im Bereich von maximal 25 °C haben. Nach dem Waschprozess und vor der Neubefüllung sind die Flaschen je nach angewendetem Verfahren mehr oder weniger der Umgebungsluft in der Halle, in der sich die Flaschenreinigungs- und -abfüllanlagen befinden, ausgesetzt.

Dabei besteht folgende Problemlage. Durch die Andienung des Leerguts in die Halle, aber auch durch den normalen Luftaustausch mit der Umgebung und durch das Bedienpersonal in der Halle, in der die Reinigung und auch die Wiederbefüllung der Flaschen stattfinden, werden die Getränkequalität gefährdende wie z. B. Fremdhefen, Keime usw. eingetragen, die sich dann in der Hallenluft befinden. Ist die Hallenluft kühler als die Atmosphäre in den Flaschen nach Verlassen des Reinigungsprozesses, werden die Flaschen weiter ausgekühlt. Dies ist bei wärmeempfindlichen Getränken grundsätzlich auch erwünscht. Zum einen kondensiert während der Abkühlung Wasserdampf, bedingt durch die hohe Luftfeuchtigkeit der Luft in den Flaschen, an der Glaswand im Innenraum und zum anderen verringert sich durch die Abkühlung das Volumen der Luft in der sich abkühlenden Flasche. Der durch die beiden Prozesse verursachte Volumenverlust wird durch nachströmende Hallenluft ausgeglichen. Dadurch können Keime wie Schimmelpilze, Hefen, Bakterien und deren Sporen aus der Hallenluft in die Flasche eindringen und die Haltbarkeit des Getränks beeinträchtigen. Ein in der Lebensmittelindustrie gängiges Verfahren ist das Verpacken von Lebensmitteln unter Schutzatmosphäre. Dieses ist aber bei Flaschenwaschanlagen im feuchten Millieu nur unter extrem hohem technischen und wirtschaftlichen Aufwand durchführbar.

Eine Sterilisation der Flaschen wird bei der Flaschenreinigung durch den Einsatz der Säuren oder Laugen bei erhöhten Temperaturen über 60 °C immer erreicht. Weiterhin ist bekannt, dass oxidierende Substanzen, im speziellen Wasserstoffperoxid und Ozon, keimtötende Wirkung besitzen. Diese beiden Substanzen finden zur Sterilisation bei der Flaschenreinigung Anwendung. Die Offenlegungsschrift DE 43 32 241 A1 beschreibt ein Verfahren, bei dem die Flaschen bis zu ihrer Wiederbefüllung mit einer keimtötenden Flüssigkeit gefüllt sind, um eine Verkeimung zu verhindern. Das Patent DE 10 2004 039 084 B4 beschreibt eine Vorrichtung mit einer Ionisationseinheit, die auch die Umgebungsluft ionisiert um eine Rückverkeimung zu verhindern. Zusätzlich muss darauf geachtet werden, dass die Stoffe vor der Befüllung mit Getränken aus der Flasche entfernt werden. Keine dieser Verfahrensweisen verhindert, dass vor dem Befüllen Umgebungsluft in die Flaschen gelangt.

Der Erfindung liegt die Aufgabe zu Grunde, ein Verfahren und eine Vorrichtung der eingangs genannten Art zu schaffen, mit denen eine Reinigung von Pfandflaschen besonders hygienisch, technisch einfach und wirtschaftlich durchgeführt werden kann. Die Lösung dieser Aufgabe erfolgt mit einem Verfahren mit den Merkmalen des Patentanspruchs 1 und mit einer Vorrichtung mit den Merkmalen des Patentanspruchs 4. Bevorzugte Ausführungen der Erfindung sind in den Unteransprüchen angeben.

Bei einem Verfahren zur Verhinderung der Rückverkeimung in einer Flaschenwaschanlage gereinigter, sterilisierter Flaschen auf dem Weg zur Abfüllung ist daher vorgesehen, dass das kalte zulaufende Frischwasser zu der Flaschenwaschanlage zur Kühlung und Spülung warmer gereinigter Flaschen vor Eintritt in die Flaschenwaschanlage soweit abgekühlt wird, dass die Temperatur der Flaschen und die Temperatur der Luft in den Flaschen nach dem Spülvorgang derart herabgesetzt ist, dass mindestens eine weitere Abkühlung und eine Kondensation von Wasserdampf in den Flaschen und eine Volumenverringerung der Luft durch Abkühlung und dadurch eine Wiederverkeimung durch mit der Luft einströmende Keime in die Flaschen weitgehend vermindert ist bzw. nicht stattfinden kann.

Mit der Erfindung wird die Verschleppung von Keimen in die abzufüllenden Flaschen im Prozess der Flaschenreinigung bis zu deren Abfüllung vermieden.

Die Erfindung verhindert bzw. vermindert durch eine Abkühlung der Flaschen im Spülprozess gleich der Hallentemperatur bis zum Gefrierpunkt des Wassers den Eintritt einer Verkeimung nach dem Reinigen und vor der Abfüllung der Flaschen, da keine weitere Abkühlung mit den beschriebenen Phänomenen stattfinden kann.

Als weiteren Effekt wird die Erfindung den Flaschendurchsatz des Waschprozesses weiter erhöhen, da eine Abkühlung zwischen dem Waschprozess und der Befüllung nicht mehr notwendig ist und die dafür benötigte Zeit eingespart werden kann.

Der energetische Bilanzraum einer Flaschenwaschanlage besteht aus dem Energieeintrag durch die Heizung und dem Energieaustrag durch die warmen gewaschenen Flaschen, dem Abwasser und den Abstrahlungsverlusten. Mit dem vorgestellten Verfahren werden als Sekundäreffekt die Energieverluste über die Flaschen und das Abwasser wieder in den Bilanzraum zurück geführt, so dass Heizenergie eingespart werden kann.

Die Abkühlungsgeschwindigkeit eines festen Materials mit einer kälteren Kühlflüssigkeit ist im Wesentlichen von der Temperatur des festen Materials, der Temperatur der Kühlflüssigkeit, deren Wärmeleitfähigkeit und den Wärmekapazitäten beider Prozessbeteiligten abhängig. Die Turbulenz der Strömung der Kühlflüssigkeit und deren Viskosität sind weitere Einflussgrößen. Damit bei annähernd gleich bleibender Wassermenge ohne eine weit reichende Änderung des Reinigungs-prozesses eine nach dem bisherigen Stand der Technik weiter reichende Kühlung der Flaschen erreicht werden kann, muss das zulaufende Frischwasser vor seinem Einsatz gekühlt werden. Das zusätzlich gekühlte Frischwasser ermöglicht durch die größere Temperaturdifferenz eine höhere Wärmeübertragungs¬geschwindigkeit und es besitzt eine höhere Wärmeübernahmekapazität als das ungekühlte Frischwasser. Das zulaufende Frischwasser durchläuft daher, bevor es für die Spülung eingesetzt wird, mindestens eine Kühleinheit, bevorzugt einen Verdampfer einer Wärmepumpe. Das Frischwasser wird dabei abgekühlt und dann im ersten Schritt der Flaschenreinigung als Spülwasser eingesetzt. Durch die stärkere Abkühlung der Flaschen und den Verbleib der Energie im Prozess wird Heizenergie eingespart.

In einer ersten Ausführung des Verfahrens wird das Spülwasser, bevor es intern im Flaschenwaschprozess weiter geleitet wird, über die Wärmeabgabeeinheit der Kühlanlage bevorzugt zu dem Kondensator der Wärmepumpe geleitet und weiter erwärmt. Die dem Frischwasser entzogene Energie wird dem Spülwasser und somit dem Prozess ohne Verluste wieder zugeführt.

Da die Flaschen zur Vermeidung von zu hohen Spannungen im Glas im Flaschenwaschprozess schrittweise abgekühlt werden, kann es notwendig sein, dass nur ein Teil des abgehenden Spülwassers erwärmt wird und nur ein Teilstrom über die Wärmeabgabeeinheit der Kühlanlage bevorzugt zu dem Kondensator der Wärmepumpe geführt wird. Die Wärmerückführung ist an die verschiedenen Flaschenwaschanlagenkonzepte anzupassen. So sind auch geschlossene Spülwasserkreisläufe in gleicher Weise zu kühlen und eine Weitergabe der entzogenen Energie auf zu erwärmende Bereiche des Flaschenwaschprozesses zu übertragen.

Da das Spülwasser durch die Vorkühlung des Frischwassers kühler ist als das ablaufende Abwasser aus dem Flaschenwaschprozess, wird das Spülwasser in einer weiteren Ausführung des Verfahrens, nachdem es die Spülung der Flaschenwaschanlage passiert hat, in einem Wärmeübertrager mit dem Abwasser direkt oder durch einen Zwischenkreislauf in wärmeübertragenden Kontakt gebracht. Dadurch wird mit dem Abwasser abfließende Wärme zurückgewonnen. Anschließend durchläuft das Spülwasser die Wärmeabgabeeinheit der Kühlanlage und bevorzugt den Kondensator der Wärmepumpe und wird nach Bedarf auf die Reinigungsstufen verteilt.

In einer weiteren Ausführung des Verfahrens wird, um die zurück zu gewinnende Wärmemenge aus dem Abwasser zu erhöhen, das Spülwasser nach dem Spülvorgang mit einer Wärmepumpe gekühlt. Die Wärme wird dann dem Spülwasser nach Passieren der Wärmeübertragung über den Kondensator der Wärmepumpe auf einem höheren Temperaturniveau wieder zugegeben. Die Wärmepumpen können lastabhängig betrieben werden. Es können auch mehrere Wärmepumpen in Reihe geschaltet werden und kaskadiert in den Betrieb gehen, so dass die erwünschten Betriebsbedingungen bei schwankenden äußeren Bedingungen optimal gestaltet werden können.

Ein weiterer Aspekt der Erfindung besteht in der Bereitstellung einer Flaschenwaschanlage mit mindestens einer Einrichtung zur Durchführung einer Hauptwäsche und einer Einrichtung zur Durchführung einer nachfolgenden Spülung mit Frischwasser. Diese Flaschenwaschanlage dient insbesondere zur Durchführung des oben beschriebenen Verfahrens. Erfindungsgemäß weist die Flaschenwaschanlage eine Kühleinheit zur Abkühlung des Frischwassers und einer Heizeinrichtung auf, wobei die Heizeinrichtung dazu vorgesehen und ausgelegt ist, die mit der Kühleinheit vom Frischwasser abgeführte Wärme dem Spülwasser auf einem höheren Temperaturniveau zuzuführen. Damit wird insbesondere eine so starke Abkühlung der Flaschen erreicht, dass verhindert wird, dass in den ansonsten noch warmen Flaschen, die sich nach dem Spülvorgang und Verlassen der Flaschenwaschanlage durch die Umgebungsluft abkühlen und durch den in den Flaschen entstehendem Unterdruck Fremdluft aus der Halle einsaugen und auf diese Weise Keime in die Flaschen eingetragen würden.

Bevorzugt sind die Kühleinheit und die Heizeinrichtung als Kondensator und Verdampfer einer Wärmepumpe ausgebildet. Die Erfindung kann mit einer solchen Wärmepumpe besonders einfach und zuverlässig durchgeführt werden.

Bevorzugt ist der Wärmepumpe ein Wärmeübertrager oder Wärmetauscher zugeordnet, der das Spülwasser aufnimmt und dieses mit dem Abwasserstrom der Flaschenwaschanlage erwärmt.

In einer anderen bevorzugten Ausführungsform der Erfindung ist der Flaschenwaschanlage eine zweite Wärmepumpe zugeordnet, in der das vorgewärmte Spülwasser zunächst im Verdampfer der zweiten Wärmepumpe abgekühlt wird.

Weiterhin ist es bevorzugt, dass jeder Wärmepumpe je zwei Wärmeübertrager zugeordnet sind. Auch ein einzelner Wärmeübertrager an einer Wärmepumpe ist günstig. Bevorzugt ist jedoch sowohl am Eingang als auch am Ausgang der Wärmepumpe jeweils ein Wärmeübertrager vorgesehen, der den Effekt der Wärmepumpe noch verstärkt.

Das Verfahren zur Verbesserung der Hygiene bei der Abfüllung von Getränken in rückgelaufene Pfandflaschen und der Einsparung von Wärmeenergie kühlt in einem ersten Schritt das zulaufende Frischwasser ab. Das Frischwasser wird in seiner ersten Nutzungsstufe während des Reinigungsprozesses rückgelaufener Pfandflaschen als Kühl- und Spülwasser der aus einer heißen Waschlauge kommenden Flaschen verwendet. Die Kühlung des zulaufenden Frischwassers wird mit dem Verdampfer mindestens einer Wärmepumpe erreicht. Das zusätzlich gekühlte Frischwasser besitzt durch die größere Temperaturdifferenz eine höhere Wärmeübertragungsgeschwindigkeit und eine höhere Wärmeübernahmekapazität als das ungekühlte Frischwasser. Die Flaschen und die Atmosphäre in den Flaschen verlassen die Waschanlage dadurch kühler als bei der Verwendung von ungekühltem Frischwasser. Dies hat zur Folge, dass die Flaschentemperatur einer im Allgemeinen kühlen Hallenluft besser angepasst ist und weitere Wärmeübertragungsprozesse stark eingeschränkt werden. Ein weiterer positiver Effekt, der sich einstellt, ist eine erhöhte Wärmerückgewinnung, da die Kühlung der Flaschen nicht durch die Hallenluft erfolgt und die Wärme somit dem System entzogen wird.

Nachfolgend wird die Erfindung anhand von in der Zeichnung dargestellten Ausführungsbeispielen weiter erläutert. Im Einzelnen zeigen die schematischen Darstellungen in:

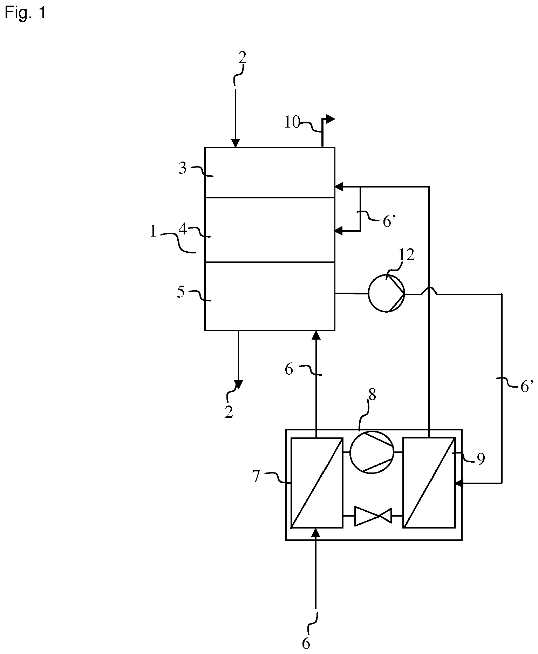

- Fig. 1:: eine erste Ausführungsform einer schematisch dargestellten erfindungsgemäßen Flaschenwaschanlage;
- Fig. 2:: eine zweite Ausführungsform einer schematisch dargestellten erfindungsgemäßen Flaschenwaschanlage;
- Fig. 3:: eine dritte Ausführungsform einer schematisch dargestellten erfindungsgemäßen Flaschenwaschanlage;
- Fig. 4:: eine vierte Ausführungsform einer schematisch dargestellten erfindungsgemäßen Flaschenwaschanlage.

Die Flaschen 2 durchlaufen die Flaschenwaschanlage 1 von der Vorwäsche 3 in Richtung Hauptwäsche 4 und Spülung 5. Im Gegenstrom wird das Frischwasser 6, das zum Spül- und Waschwasser 6' wird, geführt. In einer bevorzugten Ausführung wird das Frischwasser 6 durch den Verdampfer 7 einer Wärmepumpe 8 abgekühlt, bevor es die Spülung 5 der Flaschenwaschanlage 1 passiert, die Flaschen von Waschlauge befreit und sie dabei auch abkühlt. In einer ersten bevorzugten Ausführung wird das über den Spülprozess vorgewärmte Spülwasser 6' über den Kondensator 9 der Wärmepumpe 8 geführt und weiter aufgewärmt. Danach gelangt das Spülwasser 6' wieder nach Bedarf in den Reinigungsprozess.

In einer weiteren bevorzugten Ausführung des Verfahrens wird nach Verlassen der Spülung 5 das Spülwasser 6' über einen Wärmeübertrager 11 geführt und mit dem Abwasserstrom 10 der Flaschenwaschanlage 1 weiter erwärmt. Die letzte Vorwärmstufe des Spülwassers 6' erfolgt im Kondensator 9 der Wärmepumpe 8. Danach wird das Spülwasser 6' der Flaschenwaschanlage 1 nach Bedarf zugeführt.

In einer dritten bevorzugten Ausführung des Verfahrens wird das vorgewärmte Spülwasser 6', bevor es in wärmeübertragenden Kontakt mit dem Abwasserstrom 10 gebracht nochmals mittels eines Verdampfers 13 einer Wärmepumpe 14 abgekühlt. Die Wärme wird über den Kondensator 15 dieser Wärmepumpe 14 dem Spülwasser 6' nach dem Wärmeentzug aus dem Abwasserstrom 10 wieder zugeführt. Das Spülwasser 6' wird erst danach über den Kondensator 9 der Wärmepumpe 8 geführt und noch weiter aufgewärmt. Danach gelangt das Spülwasser 6' wieder nach Bedarf in den Reinigungsprozess.

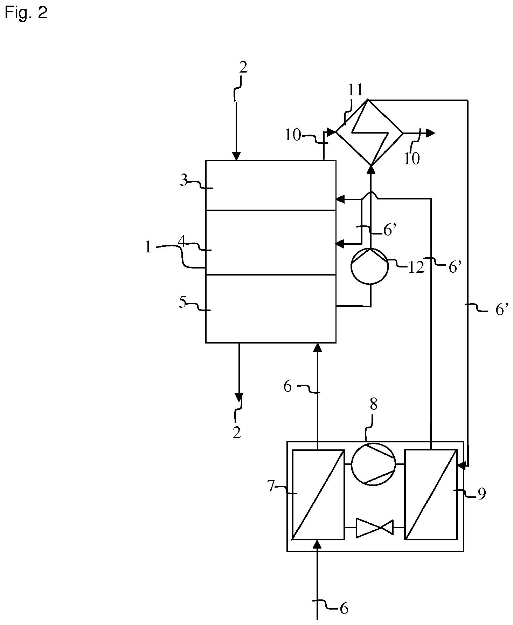

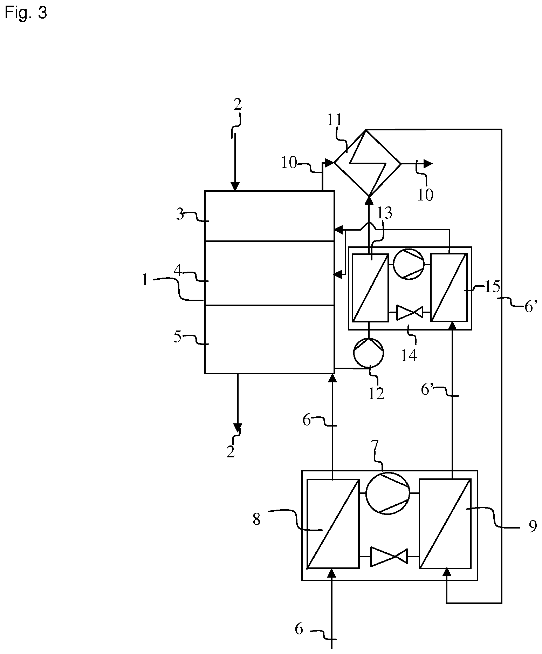

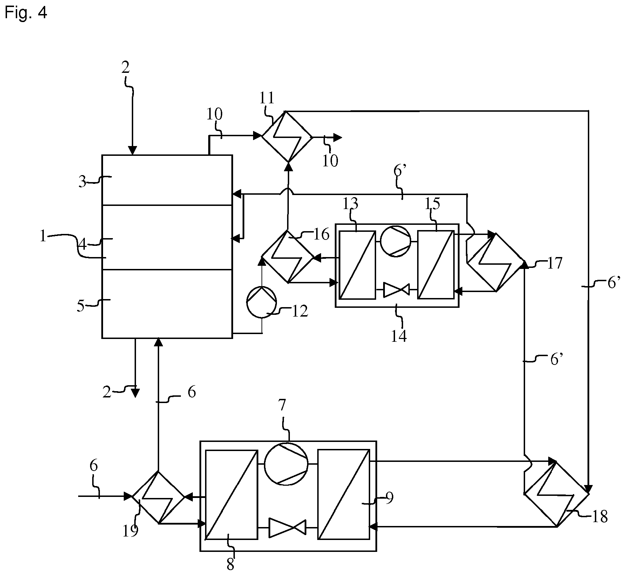

Eine vierte erfindungsgemäße Ausführungsform einer Flaschenwaschanlage ist in Fig. 4 dargestellt. Gleiche Teile sind mit gleichen Bezugszeichen beschrieben. Ergänzend zu den Ausführungsformen gemäß der Fig. 2 und 3 sind hier noch zusätzlich Wärmeübertrager 16, 17, 18 und 19 vorgesehen, wobei die Wärmeübertrager 16 und 17 der Wärmepumpe 14 vor- bzw. nachgeschaltet sind und die Wärmeübertrager 18 und 19 der Wärmepumpe 7 vor- bzw. nachgeschaltet sind. Dadurch erfolgt eine noch stärkere Erwärmung des Spülwassers 6' und eine stärkere Abkühlung des Frischwassers 6.

Alle in der vorstehenden Beschreibung und in den Ansprüchen genannten Merkmale sind in einer beliebigen Auswahl mit den Merkmalen des unabhängigen Anspruchs kombinierbar. Die Offenbarung der Erfindung ist somit nicht auf die beschriebenen bzw. beanspruchten Merkmalskombinationen beschränkt, vielmehr sind alle im Rahmen der Erfindung sinnvollen Merkmalskombinationen als offenbart zu betrachten.

## Patentansprüche

1. Verfahren zur Behandlung von Flaschen (2) in einer Flaschenwaschanlage (1) auf dem Weg zur Abfüllung, wobei die Flaschen (2) nach der Reinigung mit Frischwasser gespült werden, wobei die Flaschen (2) die Flaschenwaschanlage (1) von einer Vorwäsche (3) in Richtung einer Hauptwäsche (4) und einer Spülung (5) durchlaufen, wobei bei Kühlung und Spülung warmer, gereinigter Flaschen die Temperatur der Flaschen und die Temperatur der Luft in den Flaschen (2) nach dem Spülvorgang derart herabgesetzt ist, dass mindestens eine weitere Abkühlung und eine Kondensation von Wasserdampf in den Flaschen (2) und eine Volumenverringerung der Luft durch Abkühlung und dadurch eine Wiederverkeimung durch mit der Luft einströmende Keime in die Flaschen (2) weitgehend verhindert wird, wobei das Frischwasser (6) im Gegenstrom durch die Flaschenwaschanlage (1) geführt wird, wobei das Frischwasser (6) zum Spül- und Waschwasser (6') wird,
dass das zulaufende Frischwasser (6) zu der Flaschenwaschanlage (1) so weit abgekühlt wird, dass die Temperatur der Flaschen und die Temperatur der Luft in den Flaschen (2) nach dem Spülvorgang derart herabgesetzt ist, dass mindestens eine weitere Abkühlung und eine Kondensation von Wasserdampf in den Flaschen (2) und eine Volumenverringerung der Luft durch Abkühlung und dadurch eine Wiederverkeimung durch mit der Luft einströmende Keime in die Flaschen (2) weitgehend verhindert wird,
dass die Abkühlung des Frischwassers (6) durch Wärmeentzug mit einer Kühleinheit erreicht wird und die dem Frischwasserstrom entnommene Energie nach dem Spülvorgang in der Flaschenwaschanlage auf der Energieabgabeseite der Kühleinheit auf einem höheren Temperaturniveau durch Erwärmen des Spülwassers (6') wieder zugeführt wird,
**dadurch gekennzeichnet,**
**dass** das Spülwasser (6') in einem Wärmeübertrager (11) durch die Energie des Abwasserstroms (10) erwärmt wird und dann die vorher durch den Verdampfer (8) einer Wärmepumpe (7) entnommene Energie in dem Kondensator (9) einer Wärmepumpe (7) auf einem höheren Temperaturniveau wieder zugeführt wird,
**dass** das Spülwasser (6') bevor es in wärmeübertragenden Kontakt mit dem Abwasserstrom (10) tritt, durch einen Verdampfer (13) einer Wärmepumpe (14) geleitet wird, dabei abkühlt und damit die zu übernehmende Wärmemenge aus dem Abwasserstrom (10) erhöht und die vorher abgegebene Wärme nach Aufnahme der Wärme aus dem Abwasserstrom (10) auf einem höheren Temperaturniveau im Kondensator (15) der Wärmepumpe (14) wieder übernimmt.

2. Verfahren nach Anspruch 1, **dadurch gekennzeichnet, dass** die Abkühlung des Frischwasserstroms (6) durch Wärmeentzug in einem Verdampfer (8) einer Wärmepumpe (7) erreicht wird und die dem Frischwasser (6) entnommene Energie nach dem Spülvorgang in der Flaschenwaschanlage (1) durch einen Wärmepumpenprozess auf einem höheren Temperaturniveau über den Kondensator (9) der Wärmepumpe (7) durch Erwärmen des Spülwassers (6') wieder zugeführt wird.

3. Verfahren nach Anspruch 1 **dadurch gekennzeichnet, dass** die Wärmeenergie, die durch den Flaschenwaschprozess aus der Flaschenwaschanlage (1) entweicht, durch die Abkühlung des zulaufenden Frischwasserstroms (6) und einer Abkühlung des Abwasserstroms (10) zum Teil wieder in den Flaschenwaschprozess zurück geführt wird.

4. Flaschenwaschanlage zur Durchführung des Verfahrens nach Anspruch 1, mit mindestens einer Einrichtung zur Durchführung einer Hauptwäsche (4) und einer Einrichtung zur Durchführung einer nachfolgenden Spülung (5) mit Frischwasser (6), wobei das Frischwasser (6) im Gegenstrom durch die Flaschenwaschanlage (1) geführt ist, wobei das Frischwasser (6) zum Spül- und Waschwasser (6') wird,
**dadurch gekennzeichnet,**
**dass** die Flaschenwaschanlage (1) eine Kühleinheit zur Abkühlung des Frischwassers (6) und eine Heizeinrichtung aufweist, wobei die Heizeinrichtung dazu vorgesehen und ausgelegt ist, die mit der Kühleinheit vom Frischwasser abgeführte Wärme dem Spülwasser (6') auf einem höheren Temperaturniveau zuzuführen,
**dass** die Flaschenwaschanlage (1) einen Wärmeübertrager (11) aufweist, der das Spülwasser (6') aufnimmt und den Abwasserstrom (10) der Flaschenwaschanlage (1) weiter erwärmt, und
**dass** die Flaschenwaschanlage eine zweite Wärmepumpe (14) aufweist, in der das vorgewärmte Spülwasser (6') im Verdampfer (13) der Wärmepumpe (14) abkühlt.

5. Flaschenwaschanlage nach Anspruch 4, **dadurch gekennzeichnet, dass** die Heizeinrichtung als Kondensator (9) und die Kühleinheit als Verdampfer (8) einer Wärmepumpe (7) ausgebildet sind, wobei die Kühleinheit dazu vorgesehen und ausgelegt ist, das zulaufende Frischwasser (6) so weit abzukühlen, dass die Temperatur der Flaschen und die Temperatur der Luft in den Flaschen (2) nach dem Spülvorgang derart herabgesetzt ist, dass mindestens eine weitere Abkühlung und eine Kondensation von Wasserdampf in den Flaschen (2) und eine Volumenverringerung der Luft durch Abkühlung und dadurch eine Wiederverkeimung durch mit der Luft einströmende Keime in die Flaschen (2) weitgehend verhindert wird.

6. Flaschenwaschanlage nach einem der Ansprüche 4 oder 5, **dadurch gekennzeichnet, dass** der ersten Wärmepumpe (7) zwei Wärmeübertrager (18, 19) zugeordnet sind.

7. Flaschenwaschanlage nach einem der Ansprüche 4 bis 6, **dadurch gekennzeichnet, dass** der zweiten Wärmepumpe (14) zwei Wärmeübertrager (16, 17) zugeordnet sind.

## Claims

1. A method for handling bottles (2) in a bottle washing system (1) on the way to filling, wherein the bottles (2) are rinsed with fresh water after cleaning, wherein the bottles (2) pass through the bottle washing system (1) from a prewash (3) in the direction of a main wash (4) and rinsing (5), wherein during cooling and rinsing of warm, cleaned bottles, the temperature of the bottles and the temperature of the air in the bottles (2) is reduced after the rinsing process, in such a way that at least one further cooling and a condensation of water vapour in the bottles (2) and a volume reduction of the air by cooling and thus a re-contamination with germs flowing in with the air into the bottles (2) is largely prevented, wherein the fresh water (6) is guided in the counterflow through the bottle washing system (1), wherein the fresh water (6) becomes rinsing and washing water (6'),
that the inflowing fresh water (6) to the bottle washing system (1) is cooled to such an extent that the temperature of the bottles and the temperature of the air in the bottles (2) is reduced after the rinsing process, in such a way that at least one further cooling and a condensation of water vapour in the bottles (2) and a volume reduction of the air by cooling and thus a re-contamination by the germs flowing in with the air into the bottles (2) is largely prevented,
that the cooling of the fresh water (6) by heat extraction is achieved with a cooling unit and the energy extracted from the fresh water flow after the rinsing process in the bottle washing system is fed back on the energy output side of the cooling unit at a higher temperature level by heating of the rinsing water (6'),
**characterised in that**
the rinsing water (6') is heated in a heat exchanger (11) by the energy of the waste water flow (10) and then the energy extracted previously by the evaporator (8) of a heat pump (7) is again fed into a condenser (9) of a heat pump (7) at a higher temperature level,
that the rinsing water (6'), before it comes into heat-transferring contact with the waste water flow (10), is conveyed through an evaporator (13) of a heat pump (14), is thereby cooled and thus increases the amount of heat to be extracted from the waste water flow (10) and again takes over the previously emitted heat after the intake of the heat from the waste water flow (10) at a higher temperature level in the condenser (15) of the heat pump (14).

2. The method according to claim 1, **characterised in that** the cooling of the fresh water flow (6) is achieved by the extraction of heat in an evaporator (8) of a heat pump (7) and the energy extracted from the fresh water (6) after the rinsing process in the bottle washing system (1) is fed back again through a heat pump process at a higher temperature level via the condenser (9) of the heat pump (7) by heating of the rinsing water (6').

3. The method according to claim 1, **characterised in that** the thermal energy, which escapes through the bottle washing process from the bottle washing system (1), is fed again through the cooling of the inflowing fresh water flow (6) and cooling of the waste water flow (10) partially back into the bottle washing process.

4. A bottle washing system for performing the method according to claim 1, with at least one arrangement for performing a main wash (4) and an arrangement for performing a subsequence rinsing (5) with fresh water (6), wherein the fresh water (6) is fed in the counterflow through the bottle washing system (1), wherein the fresh water (6) becomes rinsing and washing water (6'),
**characterised in that**
the bottle washing system (1) comprises a cooling unit for cooling the fresh water (6) and a heating device, wherein the heating device is provided and designed to feed the heat extracted from the fresh water with the cooling unit to the rinsing water (6') at a higher temperature level,
that the bottle washing system (1) comprises a heat exchanger (11), which accommodates the rinsing water (6') and heats the waste water flow (10) of the bottle washing system (1) further, and
that the bottle washing system comprises a second heat pump (14), in which the preheated rinsing water (6') cools in the evaporator (13) of the heat pump (14).

5. The bottle washing system according to claim 4, **characterised in that** the heating device is designed as a condenser (9) and the cooling device as an evaporator (8) of a heat pump (7), wherein the cooling unit is provided and designed to cool the inflowing fresh water (6) to an extent such that the temperature of the bottles and the temperature of the air in the bottles (2) is reduced after the rinsing process, in such a way that at least one further cooling and a condensation of water vapour in the bottles (2) and a volume reduction of the air by cooling and thus a re-contamination by germs flowing in with the air into the bottles (2) is largely prevented.

6. The bottle washing system according to any one of claims 4 or 5, **characterised in that** two heat exchangers (18, 19) are assigned to the first heat pump (7).

7. The bottle washing system according to any one of claims 4 to 6, **characterised in that** two heat exchangers (16, 17) are assigned to the second heat pump (14).

## Revendications

1. Procédé pour le traitement de bouteilles (2) dans une installation de lavage de bouteilles (1) sur le chemin du remplissage, sachant que les bouteilles (2), après le nettoyage, sont rincées à l'eau douce, sachant que les bouteilles (2) traversent l'installation de lavage de bouteilles (1) depuis un prélavage (3) en direction d'un lavage principal (4) et d'un rinçage (5), sachant que lors du refroidissement et du rinçage des bouteilles chaudes, nettoyées, la température des bouteilles et la température de l'air dans les bouteilles (2) après l'opération de rinçage sont diminuées de telle manière qu'on évite dans une large mesure au moins un autre refroidissement et une condensation de vapeur d'eau dans les bouteilles (2) et une réduction de volume de l'air par refroidissement et de ce fait une recontamination par les germes entraînés avec l'air dans les bouteilles (2), sachant que l'eau douce (6) est dirigée à contre-courant à travers l'installation de lavage de bouteilles (1), sachant que l'eau douce (6) devient l'eau de rinçage et de lavage (6'),
que l'eau douce arrivant (6) pour l'installation de lavage de bouteilles (1) est refroidie pour autant que la température des bouteilles et la température de l'air dans les bouteilles (2) sont diminuées après l'opération de rinçage de telle manière que l'on évite, dans une large mesure, au moins un autre refroidissement et une condensation de vapeur d'eau dans les bouteilles (2) et une réduction de volume de l'air par refroidissement et de ce fait une recontamination par les germes introduits avec l'air dans les bouteilles (2),
que le refroidissement de l'eau douce (6) est atteint par évacuation de chaleur avec une unité de refroidissement et l'énergie prélevée du courant d'eau douce est à nouveau dirigée après l'opération de rinçage dans l'installation de lavage de bouteilles sur le côté de dégagement d'énergie de l'unité de refroidissement à un niveau de température plus élevé par réchauffement de l'eau de rinçage (6'),
**caractérisé en ce que**
l'eau de rinçage (6') est réchauffée dans un échangeur de chaleur (11) par l'énergie du courant d'eaux résiduaires (10) et qu'ensuite l'énergie prélevée préalablement par l'évaporateur (8) d'une pompe à chaleur (7) est à nouveau dirigée dans le condensateur (9) d'une pompe à chaleur (7) à un niveau de température plus élevé,
**en ce que** l'eau de rinçage (6') avant qu'elle n'entre en contact de transmission de chaleur avec le courant d'eaux résiduaires (10), est guidée à travers un évaporateur (13) d'une pompe à chaleur (14), se refroidit à cet effet et augmente de ce fait la quantité de chaleur à transférer venant du courant d'eaux résiduaires (10) et transfère à nouveau à un niveau de température plus élevé dans le condensateur (15) de la pompe à chaleur (14), la chaleur préalablement dégagée après transfert de la chaleur venant du courant d'eaux résiduaires (10).

2. Procédé selon la revendication 1, **caractérisé en ce que** le refroidissement du courant d'eau douce (6) est atteint par extraction de chaleur dans un évaporateur (8) d'une pompe à chaleur (7) et l'énergie prélevée de l'eau douce (6) est à nouveau amenée après l'opération de rinçage dans l'installation de lavage de bouteilles (1) par un processus de pompe à chaleur à un niveau de température plus élevé par le biais du condensateur (9) de la pompe à chaleur (7) par réchauffement de l'eau de rinçage (6').

3. Procédé selon les revendications 1, **caractérisé en ce que** l'énergie thermique, qui se dégage par le processus de lavage des bouteilles de l'installation de lavage de bouteilles (1), est redirigée en partie à nouveau dans le processus de lavage de bouteilles par le refroidissement du courant d'eau douce arrivant (6) et un refroidissement du courant d'eaux résiduaires (10).

4. Installation de lavage de bouteilles pour l'exécution du procédé selon la revendication 1, avec au moins un système pour exécuter un lavage principal (4) et un système pour exécuter un rinçage (5) ultérieur avec de l'eau douce (6), sachant que l'eau douce (6) est dirigée à contre-courant à travers l'installation de lavage de bouteilles (1), sachant que l'eau douce (6) devient l'eau de rinçage et de lavage (6'),
**caractérisée en ce que**
l'installation de lavage de bouteilles (1) comporte une unité de refroidissement pour refroidir l'eau douce (6) et un système de chauffage, sachant que le système de chauffage est prévu et conçu pour acheminer la chaleur évacuée avec l'unité de refroidissement d'eau douce à l'eau de rinçage (6') à un niveau de température plus élevé,
**en ce que** l'installation de lavage de bouteilles (1) comporte un échangeur de chaleur (11), qui reçoit l'eau de rinçage (6') et réchauffe encore le courant d'eaux résiduaires (10) de l'installation de lavage de bouteilles (1), et
**en ce que** l'installation de lavage de bouteilles comporte une deuxième pompe à chaleur (14) dans laquelle l'eau de rinçage préchauffée (6') refroidit dans l'évaporateur (13) de la pompe à chaleur (14).

5. Installation de lavage de bouteilles selon la revendication 4, **caractérisée en ce que** le système de chauffage est constitué sous la forme d'un condensateur (9) et l'unité de refroidissement sous la forme d'un évaporateur (8) d'une pompe à chaleur (7), sachant que l'unité de refroidissement est prévue et conçue pour refroidir l'eau douce arrivant (6) pour autant que la température des bouteilles et la température de l'air dans les bouteilles (2) sont baissées après l'opération de rinçage de telle manière qu'on évite, dans une large mesure, au moins un autre refroidissement et une condensation de vapeur d'eau dans les bouteilles (2) et une réduction de volume de l'air par refroidissement et de ce fait une recontamination par les germes introduits avec l'air dans les bouteilles (2).

6. Installation de lavage de bouteilles selon l'une quelconque des revendications 4 ou 5, **caractérisée en ce que** deux échangeurs de chaleur (18, 19) sont attribués à la première pompe à chaleur (7).

7. Installation de lavage de bouteilles selon l'une quelconque des revendications 4 à 6, **caractérisée en ce que** deux échangeurs de chaleur (16, 17) sont attribués à la deuxième pompe à chaleur (14).
